# EUROPÄISCHE PATENTANMELDUNG

(11) **EP 4 523 961 A1**
(43) Veröffentlichungstag der Anmeldung: **19.03.2025**
(21) Anmeldenummer: 24207533.1
(22) Anmeldetag: 24.11.2017
(51) Int. Cl.: B60N 2/02, B60N 2/22, B60N 2/235

(54) **FAHRZEUGSITZ, INSBESONDERE EIN KRAFTFAHRZEUGSITZ**

(30) Priorität: 25.11.2016 DE 102016223457
(62) Teilanmeldung aus: 17203538.8
(71) Anmelder: MAN Truck & Bus SE, 80995 München (DE)
(72) Erfinder: Schweitzer, Simon Martin Christian, 80995 München (DE); Baumann, Manuel, 80995 München (DE); Kremser, Florian, 80995 München (DE)
(74) Vertreter: v. Bezold & Partner Patentanwälte - PartG mbB

(57) **Zusammenfassung**

Die Erfindung betrifft einen Fahrzeugsitz (1), insbesondere einen Kraftfahrzeugsitz, mit einem Sitzteil (3), einer in ihrer Neigung einstellbaren Lehne (5), wenigstens einem Beschlag (10) zur schwenkbaren Lagerung der Lehne (5) an dem Sitzteil (3), und einem Handgriff (7) zur Entriegelung des Beschlags (10), wobei ein Neigungswinkel der Lehne (5) mittels des Beschlags (10) arretierbar ist. Ein Adapter (20) ist drehbar gelagert und mit dem Beschlag (10) gekoppelt, wobei zwischen dem Handgriff (7) und dem Adapter (20) ein Mitnehmer (30) angeordnet ist. Der Mitnehmer (30) wirkt mit dem Adapter (20) in einer ersten Drehrichtung (80) auf Mitnahme gekoppelt zusammen. Eine Drehung des Mitnehmers (30) in der ersten Drehrichtung (80) entriegelt den Beschlag (10). Eine Drehung des Mitnehmers (30) in einer zweiten Drehrichtung (82) betätigt eine Verriegelungsvorrichtung (70) einer weiteren Einstellkomponente des Fahrzeugsitzes (1).

## Beschreibung

Die Erfindung betrifft einen Fahrzeugsitz, insbesondere einen Kraftfahrzeugsitz, mit einem Sitzteil, einer in ihrer Neigung einstellbaren Lehne, wenigstens einem Beschlag zur schwenkbaren Lagerung der Lehne an dem Sitzteil, wobei eine Neigungseinstellung der Lehne mittels des Beschlags arretierbar ist, und einem Handgriff zur Betätigung einer Entriegelung des Beschlags.

Es sind Fahrzeugsitze bekannt, deren Lehnen relativ zu einem Sitzteil in ihrer Neigung einstellbar sind. Mit fortschreitender Technik und zunehmender Integration einer Vielzahl an Funktionen und Einstellmöglichkeiten bei Fahrzeugsitzen, bedarf es einer jeweiligen Betätigungsmöglichkeit durch einen in dem Fahrzeugsitz sitzenden Insassen, um diese Vielzahl an unterschiedlichen Funktionen einzustellen.

Der Erfindung liegt die Aufgabe zu Grunde, einen Fahrzeugsitz der eingangs genannten Art zu verbessern, insbesondere einen Fahrzeugsitz mit einer reduzierten Anzahl an Betätigungsmitteln trotz gleichbleibender Anzahl an Einstellkomponenten, bzw. einen Fahrzeugsitz mit einer erhöhten Anzahl an Einstellkomponenten trotz gleichbleibender Anzahl an Betätigungsmitteln bereitzustellen.

Diese Aufgabe wird erfindungsgemäß gelöst durch einen Fahrzeugsitz, insbesondere ein Kraftfahrzeugsitz, mit einem Sitzteil, einer in ihrer Neigung einstellbaren Lehne, wenigstens einem Beschlag zur schwenkbaren Lagerung der Lehne an dem Sitzteil, und einem Handgriff zur Entriegelung des Beschlags, wobei ein Neigungswinkel der Lehne mittels des Beschlags arretierbar ist, wobei ein Adapter drehbar gelagert und mit dem Beschlag gekoppelt ist, wobei zwischen dem Handgriff und dem Adapter ein Mitnehmer angeordnet ist, wobei der Mitnehmer mit dem Adapter in einer ersten Drehrichtung auf Mitnahme gekoppelt zusammenwirkt, und eine Drehung des Mitnehmers in der ersten Drehrichtung den Beschlag entriegelt, wobei eine Drehung des Mitnehmers in einer zweiten Drehrichtung eine Verriegelungsvorrichtung einer weiteren Einstellkomponente des Fahrzeugsitzes betätigt.

Dadurch, dass ein Adapter drehbar gelagert und mit dem Beschlag gekoppelt ist, wobei zwischen dem Handgriff und dem Adapter ein Mitnehmer angeordnet ist, wobei der Mitnehmer mit dem Adapter in einer ersten Drehrichtung auf Mitnahme gekoppelt zusammenwirkt, und eine Drehung des Mitnehmers in der ersten Drehrichtung den Beschlag entriegelt, wobei eine Drehung des Mitnehmers in einer zweiten Drehrichtung eine Verriegelungsvorrichtung einer weiteren Einstellkomponente des Fahrzeugsitzes betätigt, kann mittels des Handgriffs sowohl der Beschlag zur Einstellung des Neigungswinkels der Lehne entriegelt werden, als auch bei einer Betätigung in entgegengesetzter Drehrichtung eine Verriegelungsvorrichtung einer weiteren Einstellkomponente des Fahrzeugsitzes freigegeben oder entriegelt oder betätigt werden.

Vorteilhafte Ausgestaltungen, welche einzeln oder in Kombination miteinander eingesetzt werden können, sind Gegenstand der Unteransprüche.

Ferner kann eine sich in einer Querrichtung erstreckende Welle vorgesehen sein, welche mit dem wenigsten einen Beschlag derart wirkverbunden ist, dass eine Drehung der Welle den Beschlag entriegelt. Ferner kann ein zweiter Beschlag vorgesehen sein, welcher an einer dem ersten Beschlag gegenüberliegenden Seite des Fahrzeugsitzes angeordnet ist. Die Welle kann koaxial zu einer Schwenkachse der Lehne angeordnet sein. Die beiden Beschläge können mittels der Welle wirkverbunden sein, so dass beide Beschläge zeitgleich entriegelbar sind.

Eine Durchgangsöffnung des Adapters und eine Öffnung des Mitnehmers können koaxial zur Welle angeordnet sein. Der Adapter kann drehfest mit der Welle verbunden sein. Der Adapter kann aus einem Kunststoffmaterial gefertigt sein. Der Adapter kann mittels eines Spritzgussverfahrens gefertigt sein. Der Adapter kann mit dem Beschlag wirkverbunden sein. Der Mitnehmer kann eine Anschlagsfläche (einen Anschlag) aufweisen. Der Adapter kann eine Anschlagsfläche aufweisen, insbesondere eine senkrecht zu einer Umfangsrichtung orientierten Anschlagsfläche. Der Mitnehmer kann im Bereich einer Öffnung einen Anschlag aufweisen, welcher durch eine Drehung des Mitnehmers in einer vorgegebenen Drehrichtung mit der Anschlagsfläche des Adapters in Kontakt bringbar ist. Mittels des Anschlags des Mitnehmers und der Anschlagfläche des Adapters kann eine einseitige Kopplung auf Mitnahme bereitstellbar sein. In einer der zuvor genannten Drehrichtung entgegengesetzte Drehrichtung kann der Mitnehmer unabhängig von dem Adapter drehbar sein, insbesondere entlang eines Leerweges drehbar sein.

Ein erstes Federelement kann zwischen Adapter und Beschlag wirken, um den Adapter in Richtung einer Grundstellung vorzuspannen. Das erste Federelement kann eine Spiralfeder sein. Der Adapter kann mittels des ersten Federelements vorgespannt sein. Der Adapter kann mittels des ersten Federelements in einer ersten Drehrichtung, insbesondere in Richtung einer ersten Endstellung des Adapters, in welcher der Beschlag verriegelt ist, vorgespannt sein. Die Endstellung des Adapters ist relativ zum Fahrzeugsitz definiert. Der Adapter kann ausgehend von einer ersten Endstellung in einer zweiten Drehrichtung drehbar sein, beispielsweise um bis zu 30° drehbar sein.

Darüber hinaus kann ein zweites Federelement zwischen dem Adapter und dem Mitnehmer wirken, um den Mitnehmer in Richtung einer Grundstellung vorzuspannen. Das zweite Federelement kann eine Spiralfeder sein. Der Mitnehmer kann mittels des zweiten Federelements vorgespannt sein. Der Mitnehmer kann mittels des zweiten Federelements in einer zweiten Drehrichtung, insbesondere in Richtung einer ersten Endstellung des Mitnehmers, in welcher sich ein Anschlag des Mitnehmers und eine Anschlagfläche des Adapters in Anlage befinden, vorgespannt sein. Die erste Endstellung des Mitnehmers ist in Relation zum Adapter definiert und wird bei einer Drehung des Adapters entsprechend der Drehung mit verlagert. Das zweite Federelement wirkt bevorzugt in einer entgegengesetzten Drehrichtung auf den Mitnehmer, als das erste Federelement auf den Adapter. Der Mitnehmer kann ausgehend von seiner ersten Endstellung in einer ersten Drehrichtung drehbar sein, beispielsweise um bis zu 20° drehbar sein.

Der Mitnehmer kann wenigstens einen Nocken, insbesondere einen radial abstehenden Nocken, aufweisen, welcher mit einem Vorsprung des Adapters zusammenwirkt, wenn der Adapter zusammen mit dem Mitnehmer entlang der zweiten Drehrichtung verdreht ist. Der Mitnehmer kann einen Arm aufweisen, insbesondere einen radial abstehenden Arm. Der Arm kann eine Aufnahme zur Verbindung eines Endabschnittes eines Bowdenzuges aufweisen.

Der Bowdenzug kann mit seinem dem Arm gegenüberliegenden Ende mit der Verriegelungsvorrichtung einer weiteren Einstellkomponente des Fahrzeugsitzes wirkverbunden sein. Die weitere Einstellkomponente des Fahrzeugsitzes kann der Einstellung einer Neigung des Sitzteils dienen. Die weitere Einstellkomponente des Fahrzeugsitzes kann der Einstellung einer Neigung eines oberen Lehnenabschnitts einer zweiteiligen Lehne, relativ zu einem unteren Lehnenabschnitt der zweiteiligen Lehne, dienen.

Die Erfindung betrifft auch ein Kraftfahrzeug, insbesondere ein Nutzfahrzeug (z. B. einen Omnibus oder einen Lastkraftwagen), mit einem Fahrzeugsitz wie hierin offenbart.

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Darstellung eines erfindungsgemäßen Fahrzeugsitzes,
- Fig. 2:: eine perspektivische Ansicht eines Beschlagsystems des Fahrzeugsitzes aus Fig. 1,
- Fig. 3:: eine Explosionsdarstellung eines Adapters, eines Mitnehmers, eines ersten und zweiten Federelements,
- Fig. 4:: eine perspektivische Ansicht der Komponenten aus Fig. 3 in zusammengesetztem Zustand,
- Fig. 5:: eine ausschnittsweise Darstellung des Fahrzeugsitzes mit den Komponenten gemäß Fig. 4,
- Fig. 6:: eine ausschnittsweise Darstellung des Fahrzeugsitzes gemäß Fig. 5 mit einem montierten Handgriff,
- Fig. 7:: eine vergrößerte Ansicht des Beschlagsystems des Fahrzeugsitzes,
- Fig. 8:: eine Schnittdarstellung des Beschlagsystems von Fig. 7,
- Fig. 9:: eine Ansicht des Beschlagsystems von Fig. 7 in einem Zustand mit gedrehtem Adapter, und
- Fig. 10:: eine Ansicht des Beschlagsystems von Fig. 7 in einem Zustand mit gedrehtem Mitnehmer.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

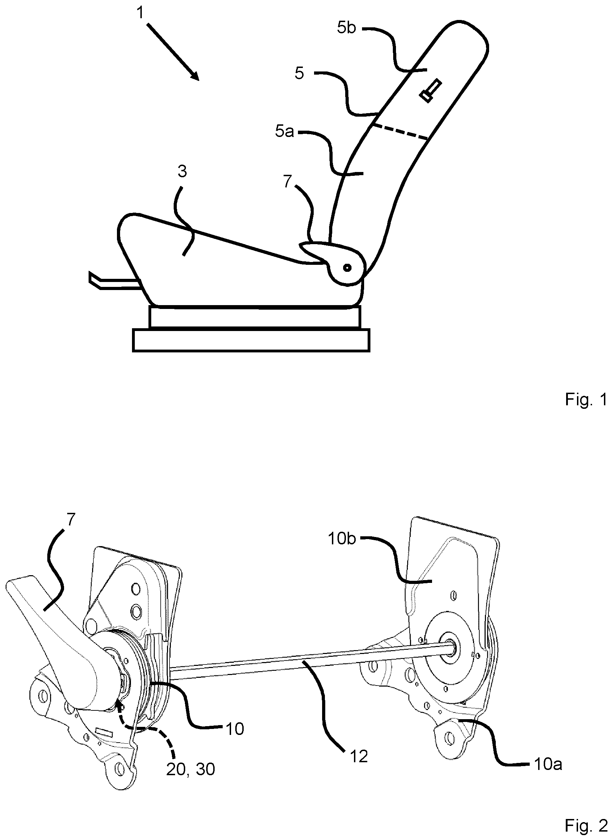

Fig. 1 zeigt einen erfindungsgemäßen Fahrzeugsitz 1. Der Fahrzeugsitz 1 weist einen Sitzteil 3 und eine in ihrer Neigung einstellbare Lehne 5 auf. Zur schwenkbaren Lagerung der Lehne 5 an dem Sitzteil 3 ist wenigstens ein Beschlag 10 vorgesehen, wobei eine Neigungseinstellung der Lehne 5 mittels des Beschlags 10 arretierbar ist. Bevorzugt ist auf jeder Seites des Fahrzeugsitzes 1 ein Beschlag 10 angeordnet. Ferner ist ein Handgriff 7 zur Betätigung einer Entriegelung des Beschlags 10 gezeigt, welcher vorliegend fluchtend zu dem Beschlag 10 angeordnet ist.

Der Fahrzeugsitz 1 kann insbesondere in einem Kraftfahrzeug, insbesondere einem Nutzfahrzeug, umfasst sein. Beispielsweise kann das Nutzfahrzeug ein Omnibus oder ein Lastkraftwagen sein.

Fig. 2 zeigt eine perspektivische Ansicht eines Beschlagsystems des Fahrzeugsitzes 1 aus Fig. 1. Das Beschlagsystem weist zwei Beschläge 10 auf, welche jeweils auf einer gegenüberliegenden Seite des Fahrzeugsitzes 1 montierbar sind. Die Beschläge 10 sind in Form von aus dem Stand der Technik bekannten Rastbeschlägen ausgebildet, wie sie beispielsweise aus der DE 102008024853 A1 bekannt sind. Die Beschläge 10 weisen jeweils ein unteres Beschlagteil 10a und ein oberes Beschlagteil 10b auf, welche bei entriegeltem Beschlag 10 gegeneinander verdrehbar sind. Das untere Beschlagteil 10a ist bekanntermaßen mit einem Rahmenteil des Sitzteils 3 des Fahrzeugsitzes 1 verbindbar, wobei das obere Beschlagteil 10b mit einem Rahmenabschnitt der Lehne 5 des Fahrzeugsitzes 1 verbindbar ist.

Ferner ist eine sich in einer Querrichtung y erstreckende Welle 12 vorgesehen, welche mit den vorliegend zwei Beschlägen 10 wirkverbunden ist. Die Welle 12 ist koaxial zu einer Schwenkachse der Lehne 5 angeordnet. Die beiden Beschläge 10 sind mittels der Welle 12, welche auch als Übertragungsstange bezeichnet sein kann, derart miteinander wirkverbunden, dass eine Betätigung der Welle 12 beide Beschläge 10 entriegelt oder verriegelt, bzw. die Betätigungsbewegung eines der beiden Beschläge 10 mittels der Welle 12 auf den jeweils anderen Beschlag 10 übertragbar ist. Der Handgriff 7 ist fluchtend zur Welle 12 angeordnet und mit der Welle 12 wirkverbunden. Anders ausgedrückt, sind die beiden Beschläge 10 mittels der Welle 12 wirkverbunden, so dass beide Beschläge 10 mittels nur genau eines Handgriffs 7 zeitgleich entriegelbar sind.

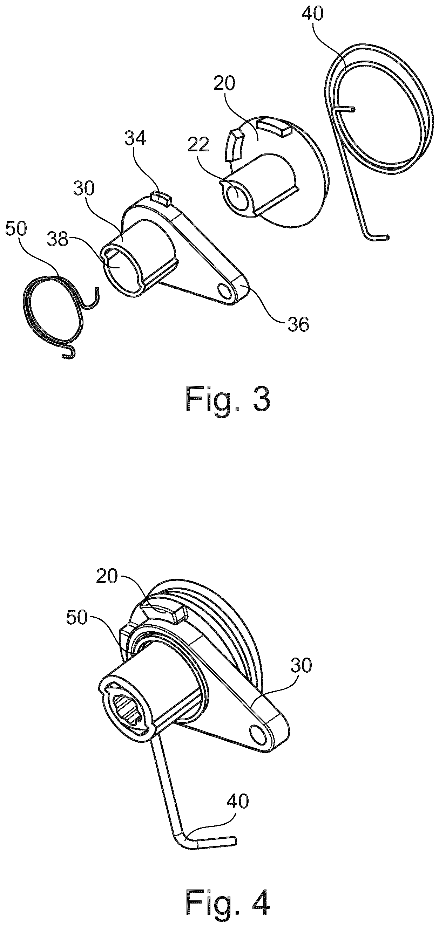

Zwischen dem Handgriff 7 und dem jeweils dem Handgriff benachbarten Beschlag 10 sind die in den Figuren 3 und 4 gezeigten Komponenten angeordnet. Hierbei handelt es sich um einen Adapter 20, einen Mitnehmer 30, ein erstes Federelement 40 und ein zweites Federelement 50. Das erste Federelement 40 weist die Form einer Schenkelfeder auf. Das zweite Federelement 50 weist die Form einer Schenkelfeder auf. Der Mitnehmer 30 weist einen Arm 36 auf, an dessen freiem Ende eine Aufnahme zur Verbindung mit einem Endabschnitt eines Bowdenzuges 60 vorgesehen ist.

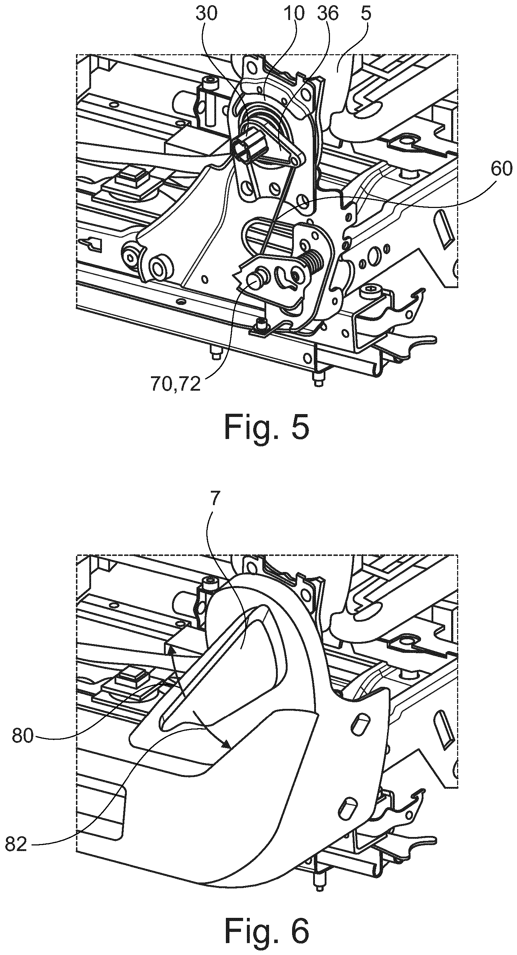

Fig. 5 zeigt eine ausschnittsweise Darstellung des Fahrzeugsitzes 1 mit den Komponenten gemäß Fig. 4, welche um einen Endabschnitt der Welle 12 angeordnet sind. Vorliegend ist der Adapter 20 unmittelbar drehfest mit der Welle 12 verbunden, welche wiederum drehfest mit den beiden Beschlägen 10 wirkverbunden ist. Hierdurch ist der Adapter 20 auf den Beschlag 10 wirkend angeordnet. Ferner ist der Mitnehmer 30 auf den Adapter 20 aufgesteckt.

Der Mitnehmer 30 ist zur Entriegelung des Beschlages 10 mit dem Adapter 20 in einer ersten Drehrichtung 80 auf Mitnahme gekoppelt. Eine Verriegelungsvorrichtung 70 einer weiteren Einstellkomponente des Fahrzeugsitzes 1 ist ferner dadurch betätigbar, wenn der Mitnehmer 30 entlang einer zweiten Drehrichtung 82 bewegt wird.

Der Bowdenzug 60 ist mit seinem dem Arm 36 des Mitnehmers 30 gegenüberliegenden Ende mit der Verriegelungsvorrichtung 70 der weiteren Einstellkomponente des Fahrzeugsitzes 1 wirkverbunden, insbesondere mit einem Betätigungshebel 72 der Verriegelungsvorrichtung 70 verbunden. Die weitere Einstellkomponente des Fahrzeugsitzes 1 kann der Einstellung einer Neigung des Sitzteils 3 oder der Einstellung einer Neigung eines oberen Lehnenabschnitts 5b, relativ zu einem unteren Lehnenabschnitt 5a, einer zweiteiligen Lehne 5 dienen.

Fig. 6 zeigt eine ausschnittsweise Darstellung des Fahrzeugsitzes 1, wobei ausgehend von dem Fahrzeugsitz 1 gemäß Fig. 5 zunächst eine seitliche Abdeckung montiert ist und anschließend der Handgriff 7 fluchtend zur Welle 12 montiert wurde. Der Handgriff 7 ist hierbei mit dem Mitnehmer 30 drehfest verbunden.

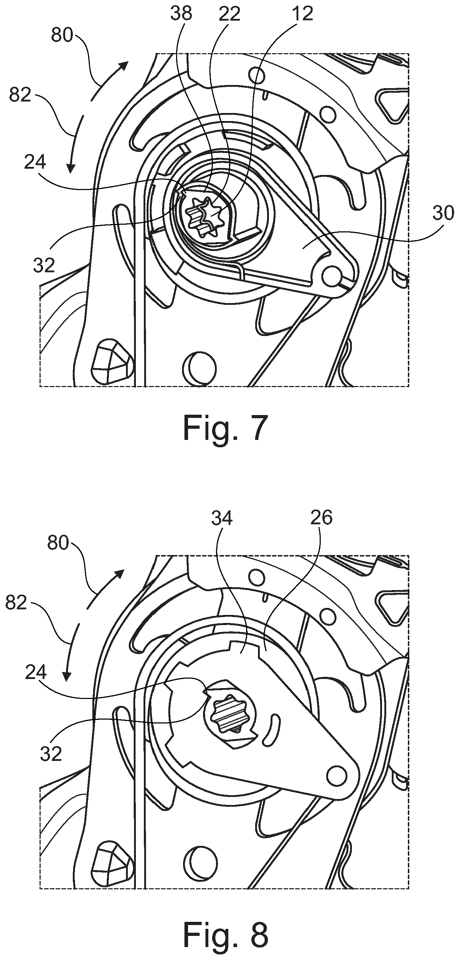

Fig. 7 zeigt eine vergrößerte Ansicht des an dem Beschlag 10 des Fahrzeugsitzes 1 montierten Adapters 20, mit daran angeordnetem Mitnehmer 30. Der Adapter 20 weist eine von einem rotationssymmetrischen Querschnitt abweichende Durchgangsöffnung 22 auf, mittels welcher er auf die Welle 12 aufsteckbar ist. Durch den nicht rotationssymmetrischen Öffnungsquerschnitt ist der Adapter 20 drehfest mit der Welle 12 verbunden, wobei die Welle 12 bevorzugt einen entsprechend kooperierenden Querschnitt aufweist. Vorliegend weist die Welle 12 ein Keilwellenprofil auf.

Der Adapter 20 weist eine Anschlagsfläche 24 auf, insbesondere eine senkrecht zu einer Umfangsrichtung orientierte Anschlagsfläche 24. Der Mitnehmer 30 weist im Bereich einer Öffnung 38 einen Anschlag 32 auf, welcher durch eine Drehung des Mitnehmers 30 in einer Drehrichtung 80 mit der Anschlagsfläche 24 des Adapters 20 in Kontakt bringbar. Mittels des Anschlags 32 des Mitnehmers 30 und der Anschlagfläche 24 des Adapters 20 ist eine einseitige Kopplung auf Mitnahme bereitgestellt. In einer der zuvor genannten Drehrichtung 80 entgegengesetzten Drehrichtung 82 ist der Mitnehmer 30 unabhängig von dem Adapter 20 drehbar, insbesondere entlang eines Leerweges drehbar.

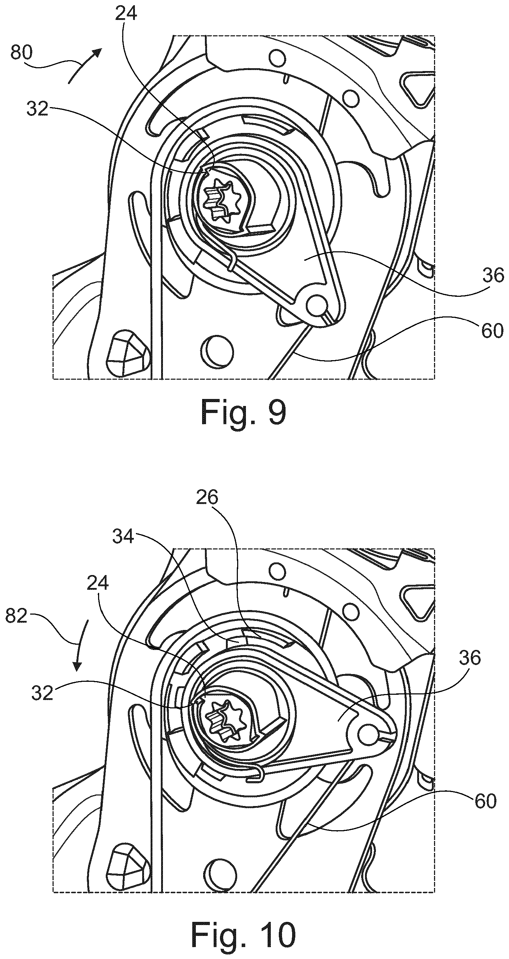

Der in Fig. 7 gezeigte Zustand der dargestellten Komponenten stellt eine Grundstellung des Mitnehmers 30 und des Adapters 20 dar, in welcher die Beschläge 10 sowie die Verriegelungsvorrichtung 70 nicht betätigt sind. Das erste Federelement 40 ist zwischen Adapter 20 und Beschlag 10 wirkend angeordnet, um den Adapter 20 in die Grundstellung zu überführen. Der Adapter 20 ist hierbei mittels des ersten Federelements 40 in der Drehrichtung 82 in Richtung einer ersten Endstellung des Adapters 20 vorgespannt. Die Endstellung des Adapters 20 ist relativ zum Fahrzeugsitz 1 definiert und kann beispielsweise mittels eines Endanschlages vorgegeben sein. Der Adapter 20 ist ausgehend von der ersten Endstellung des Adapters 20, welche der Grundstellung entspricht, in der Drehrichtung 80 drehbar, beispielsweise um bis zu 30° drehbar. In der Grundstellung sind die beiden Beschläge 10 verriegelt. Dieser Zustand ist in Fig. 9 dargestellt.

Das zweite Federelement 50 ist zwischen dem Adapter 20 und dem Mitnehmer 30 wirkend angeordnet. Jeweils ein Federende des zweiten Federelements 50 stützt sich an dem Adapter 20 und dem Mitnehmer 30 ab. Das zweite Federelement 50 dient einer Überführung des Mitnehmers 30 in eine Grundstellung relativ zum Adapter 20. Der Mitnehmer 30 ist mittels des zweiten Federelements 50 in der Drehrichtung 80 in Richtung der Grundstellung des Mitnehmers 30, in welcher sich der Anschlag 32 des Mitnehmers 30 und die Anschlagfläche 24 des Adapters 20 in Anlage befinden, vorgespannt. Die dargestellte Grundstellung des Mitnehmers 30 ist in Relation zum Adapter 20 definiert und wird bei einer Drehung des Adapters 20 entsprechend der Drehung mit verlagert. Das zweite Federelement 50 wirkt in der ersten Drehrichtung 80 auf den Mitnehmer 30. Das erste Federelement 40 wirkt in einer zweiten Drehrichtung 82 auf den Adapter 20. Der Mitnehmer 30 kann ausgehend von seiner Endstellung in der Drehrichtung 82 drehbar sein, beispielsweise um bis zu 20° drehbar sein. Dabei löst sich der Anschlag 32 von der Anschlagfläche 24. Dieser Zustand ist in Fig. 10 dargestellt.

In Fig. 8 ist eine Schnittdarstellung des Mitnehmers 30 und des Adapters 20 gezeigt. Der Mitnehmer 30 weist vorliegend drei radial abstehende Nocken 34 auf, welche in taschenartigen Vorsprüngen 26 des Adapters 20 aufgenommen sind, sofern sich der Mitnehmer 30 in der Grundstellung befindet. Die taschenartigen Vorsprünge 26 sind radial nach innen, sowie in Drehrichtung 82 geöffnet. Die taschenartigen Vorsprünge 26 sind radial nach außen und in Drehrichtung 80 geschlossen. Wird der Mitnehmer 30 relativ zum Adapter 20 verdreht, drehen die Nocken 34 aus den Vorsprüngen 26 heraus. Wird der Mitnehmer 30 in der Drehrichtung 80 verdreht, befinden sich die Nocken 34 in Eingriff mit den Vorsprüngen 26 und leiten die Rotationskraft hierdurch sicher in den Adapter 20 ein und verdrehen diesen in gleicher Drehrichtung 80.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Sitzteils, der Lehne, des Handgriffs, des Beschlags, des Adapters, des Mitnehmers und der Verriegelungsvorrichtung und/oder der weiteren Einstellkomponente des unabhängigen Anspruchs 1 offenbart.

### Bezugszeichenliste

- 1: Fahrzeugsitz
- 3: Sitzteil
- 5: Lehne
- 5a: unterer Lehnenabschnitt
- 5b: oberer Lehnenabschnitt
- 7: Handgriff
- 10: Beschlag
- 10a: unteres Beschlagteil
- 10b: oberes Beschlagteil
- 12: Welle
- 20: Adapter
- 22: Durchgangsöffnung
- 24: Anschlagfläche
- 26: Vorsprung
- 30: Mitnehmer
- 32: Anschlag
- 34: Nocken
- 36: Arm
- 38: Öffnung
- 40: Federelement
- 50: Federelement
- 60: Bowdenzug
- 70: Verriegelungsvorrichtung
- 72: Betätigungshebel
- 80: Drehrichtung
- 82: Drehrichtung

## Patentansprüche

1. Fahrzeugsitz (1), insbesondere ein Kraftfahrzeugsitz, mit einem Sitzteil (3), einer in ihrer Neigung einstellbaren Lehne (5), wenigstens einem Beschlag (10) zur schwenkbaren Lagerung der Lehne (5) an dem Sitzteil (3), und einem Handgriff (7) zur Entriegelung des Beschlags (10), wobei ein Neigungswinkel der Lehne (5) mittels des Beschlags (10) arretierbar ist,
**dadurch gekennzeichnet, dass**
ein Adapter (20) drehbar gelagert und mit dem Beschlag (10) gekoppelt ist, wobei zwischen dem Handgriff (7) und dem Adapter (20) ein Mitnehmer (30) angeordnet ist, wobei der Mitnehmer (30) mit dem Adapter (20) in einer ersten Drehrichtung (80) auf Mitnahme gekoppelt zusammenwirkt, und eine Drehung des Mitnehmers (30) in der ersten Drehrichtung (80) den Beschlag (10) entriegelt, wobei eine Drehung des Mitnehmers (30) in einer zweiten Drehrichtung (82) eine Verriegelungsvorrichtung (70) einer weiteren Einstellkomponente des Fahrzeugsitzes (1) betätigt.

2. Fahrzeugsitz (1) nach Anspruch 1, wobei:
eine sich in einer Querrichtung erstreckende Welle (12) vorgesehen ist, welche mit dem wenigsten einen Beschlag (10) derart wirkverbunden ist, dass eine Drehung der Welle (12) den Beschlag (10) entriegelt; und/oder
ein zweiter Beschlag (10) vorgesehen ist, welcher an einer dem ersten Beschlag (10) gegenüberliegenden Seite des Fahrzeugsitzes (1) angeordnet ist.

3. Fahrzeugsitz (1) Anspruch 2, wobei:
die Welle (12) koaxial zu einer Schwenkachse der Lehne (5) angeordnet ist; und/oder
die beiden Beschläge (10) mittels der Welle (12) wirkverbunden sind, so dass beide Beschläge (10) zeitgleich entriegelbar sind; und/oder
eine Durchgangsöffnung (22) des Adapters (20) und eine Öffnung (38) des Mitnehmers (30) koaxial zur Welle (12) angeordnet sind; und/oder
der Adapter (20) drehfest mit der Welle (12) verbunden ist.

4. Fahrzeugsitz (1) nach einem der vorherigen Ansprüche, wobei:
der Adapter (20) aus einem Kunststoffmaterial gefertigt ist; und/oder
der Adapter (20) mittels eines Spritzgussverfahrens gefertigt ist; und/oder der Adapter (20) mit dem Beschlag (10) wirkverbunden ist.

5. Fahrzeugsitz (1) nach einem der vorherigen Ansprüche, wobei:
der Mitnehmer (30) einen Anschlag (32) aufweist; und/oder
der Adapter (20) eine Anschlagfläche (24) aufweist, insbesondere eine senkrecht zu einer Umfangsrichtung orientierte Anschlagfläche (24).

6. Fahrzeugsitz (1) nach Anspruch 5, wobei:
der Mitnehmer (30) im Bereich einer Öffnung (38) den Anschlag (32) aufweist, welcher durch eine Drehung des Mitnehmers (30) in einer vorgegebenen Drehrichtung mit der Anschlagfläche (24) des Adapters (20) in Kontakt bringbar ist; und/oder
mittels des Anschlags (32) des Mitnehmers (30) und der Anschlagfläche (24) des Adapters (20) eine einseitige Kopplung auf Mitnahme bereitstellbar ist; und/oder
der Mitnehmer (30) in einer Drehrichtung unabhängig von dem Adapter (20) drehbar ist, insbesondere entlang eines Leerweges drehbar ist.

7. Fahrzeugsitz (1) nach einem der vorherigen Ansprüche, wobei:
ein erstes Federelement (40) zwischen dem Adapter (20) und dem Beschlag (10) wirkt, um den Adapter (20) in Richtung einer Grundstellung vorzuspannen, und/oder
ein zweites Federelement (50) zwischen dem Adapter (20) und dem Mitnehmer (30) wirkt, um den Mitnehmer (30) in Richtung einer Grundstellung vorzuspannen.

8. Fahrzeugsitz (1) nach Anspruch 7, wobei:
das erste Federelement (40) eine Spiralfeder ist; und/oder
der Adapter (20) mittels des ersten Federelements (40) vorgespannt ist.

9. Fahrzeugsitz (1) nach Anspruch 7 oder Anspruch 8, wobei:
der Adapter (20) mittels des ersten Federelements (40) in einer ersten Drehrichtung, insbesondere in Richtung einer ersten Endstellung des Adapters (20), in welcher der Beschlag (10) verriegelt ist, vorgespannt ist, und/oder
der Adapter (20) ausgehend von einer ersten Endstellung in einer zweiten Drehrichtung drehbar ist, beispielsweise um bis zu 30° drehbar ist.

10. Fahrzeugsitz (1) nach einem der Ansprüche 7 bis 9, wobei:
das zweite Federelement (50) eine Spiralfeder ist; und/oder der Mitnehmer (30) mittels des zweiten Federelements (50) vorgespannt ist; und/oder
der Mitnehmer (30) mittels des zweiten Federelements (50) in einer zweiten Drehrichtung, insbesondere in Richtung einer ersten Endstellung des Mitnehmers (30), in welcher sich ein Anschlag (32) des Mitnehmers (30) und eine Anschlagsfläche (24) des Adapters (20) in Anlage befinden, vorgespannt ist.

11. Fahrzeugsitz (1) nach einem der Ansprüche 7 bis 10, wobei:
das zweite Federelement (50) in einer entgegengesetzten Drehrichtung auf den Mitnehmer (30) wirkt, als das erste Federelement (40) auf den Adapter (20); und/oder
der Mitnehmer (30) ausgehend von seiner ersten Endstellung in einer ersten Drehrichtung drehbar ist, beispielsweise um bis zu 20° drehbar ist.

12. Fahrzeugsitz (1) nach einem der vorherigen Ansprüche, wobei:
der Mitnehmer (30) wenigstens einen Nocken (34), insbesondere einen radial abstehenden Nocken, aufweist, welcher mit einem Vorsprung (26) des Adapters (20) zusammenwirkt, wenn der Adapter (20) zusammen mit dem Mitnehmer (30) entlang der zweiten Drehrichtung verdreht ist; und/oder
der Mitnehmer (30) einen Arm (36) aufweist, insbesondere einen radial abstehenden Arm.

13. Fahrzeugsitz (1) nach Anspruch 12, wobei:
der Arm (36) eine Aufnahme zur Verbindung eines Endabschnittes eines Bowdenzuges (60) aufweist und, insbesondere, der Bowdenzug (60) mit seinem dem Arm (36) gegenüberliegenden Ende mit der Verriegelungsvorrichtung (70) der weiteren Einstellkomponente des Fahrzeugsitzes (1) wirkverbunden ist.

14. Fahrzeugsitz (1) nach einem der vorherigen Ansprüche, wobei:
die weitere Einstellkomponente des Fahrzeugsitzes (1) zur Einstellung einer Neigung des Sitzteils (3) ausgebildet ist; und/oder
die weitere Einstellkomponente des Fahrzeugsitzes (1) zur Einstellung einer Neigung eines oberen Lehnenabschnitts (5b) einer zweiteiligen Lehne, relativ zu einem unteren Lehnenabschnitt (5a) der zweiteiligen Lehne, ausgebildet ist.

15. Kraftfahrzeug, insbesondere Nutzfahrzeug, mit einem Fahrzeugsitz nach einem der vorherigen Ansprüche.
